# EUROPÄISCHE PATENTSCHRIFT

(11) **EP 1 237 751 B1**
(45) Veröffentlichungstag und Bekanntmachung des Hinweises auf die Patenterteilung: **08.03.2006**
(21) Anmeldenummer: 00993312.8
(22) Anmeldetag: 06.12.2000
(51) Int. Cl.: B60R 13/08

(54) **LEICHTE SCHALLISOLATION MIT PARTIELLER TRITTFESTIGKEIT**
LIGHT-WEIGHT SOUND PROOFING MATERIAL HAVING PARTIAL TREAD RESISTANCE
ELEMENT D'ISOLATION ACOUSTIQUE LEGER PRESENTANT DES ZONES POSSEDANT DES RESISTANCES A L'USURE DIFFERENTES

(30) Priorität: 06.12.1999 DE 19958663
(43) Veröffentlichungstag der Anmeldung: 11.09.2002
(73) Patentinhaber: Stankiewicz GmbH, D-29352 Adelheidsdorf (DE)
(72) Erfinder: VALENTIN, Erhard, 29352 Adelheidsdorf (DE)
(74) Vertreter: Melzer, Wolfgang
(86) Internationale Anmeldenummer: PCT/EP2000/012306
(87) Internationale Veröffentlichungsnummer: WO 2001/042053

(56) Entgegenhaltungen:
- EP-A- 0 882 561
- DE-A- 2 006 741
- US-A- 4 529 639

## Beschreibung

Die Erfindung betrifft ein als akustisches Masse-Feder-System ausgebildetes leichtgewichtiges Schallisolationsteil, das Bereiche mit erhöhter Trittfestigkeit aufweist, sowie ein Verfahren zur Herstellung desselben.

Im Stand der Technik sind geformte Schallisolationen mit integriertem Teppich in der Ausführung als Masse-Feder-Systeme mit Hinterschäumungen aus Polyurethanschaum bekannt.

Aus der DE-AS-20 06 741 ist ein mehrschichtiges, schalldämmendes Bauteil für eine aus Blechpreßteilen zusammengesetzte Karosserie bekannt. Das schalldämmende Bauteil besteht dabei aus einer Schicht aus dynamisch weichem Werkstoff, wie z. B. Schaumstoff, der an der Karosserie des Fahrzeuges schwimmend gelagert ist, einer Schwerschicht, die auf dem weichen Werkstoff angeordnet ist, und einem Teppich oder Belag, der auf der Schwerschicht aufgebracht ist. Diese Schichtanordnung verbessert die Schalldämmung und vermindert auch die Übertragung des Karosseriekörperschalls in den Innenraum des Fahrzeuges.

Aus der US 4,579,764 ist ein geformter, hinterschäumter Teppichaufbau bekannt, der in Kraftfahrzeugen verwendet wird. Der Aufbau umfaßt eine Teppichschicht mit einer aufgebrachten, formbaren thermoplastischen Polymerschicht und eine akustisch dämmende Schaumschicht, die mit der thermoplastischen Polymerschicht verbunden ist. Als flexibles Schaumdämmmaterial wird bevorzugt ein Polyurethanschaum mit überwiegend offenzelliger Struktur verwendet. Um das Gewicht des Schallisolationsteils zu veringern und um eine bessere Anpassung an die zu dämmende Struktur zu erreichen, wird der Polyurethanschaum bevorzugt nur an einigen ausgewählten Bereichen unter der thermoplastischen Polymerschicht vorgesehen.

Die physikalischen Gesetzmäßigkeiten von Schallisolationsteilen auf Basis von Masse-Feder-Systemen sind in der Literatur, wie beispielsweise in der Firmendruckschrift "Information Nr. 130" ("Fortschrittliche Schallisolationen für Automobile") der Firma Stankiewicz GmbH (herausgegeben zur 52. Internationalen Automobil-Ausstellung, Frankfurt/Main, 11.-20.09.1987) beschrieben.

Aus der vorgenannten Firmendruckschrift ist bekannt, daß sich als akustische Feder akustisch wirksamer Schaum aufgrund seiner besonderen Eigenschaften, die von modernen hochwirksamen Schallisolations-Formteilen verlangt werden, allmählich durchzusetzen beginnt.

Formteile aus akustisch wirksamem Schaum sind relativ leicht herzustellen und zeichnen sich durch eine hohe Paßgenauigkeit aus. Über die bei der Herstellung des akustischen wirksamen Schaumes verwendeten chemischen Komponenten sowie über die angelegten Reaktionsbedingungen können beispielsweise die Dichte und/oder die Vernetzung bei Zweikomponentenmaterialien gezielt beeinflußt werden.

Zunächst wurde für Schallisolationsteile ein Leichtschaum im Masse-Feder-System mit einer Dichte von 70 kg/m³ verwendet. Es begann dann eine Entwicklung, die darauf abzielte, im niederfrequenten Bereich, z.B. unterhalb von 200 Hz, verbesserte Schalldämmeigenschaften zur Verfügung zu haben, um die akustisch schädlichen Zündfrequenzeinflüsse im Fahrgastraum zu dämmen. Als Ergebnis dieser Entwicklung wurde ein sog. viskoelastischer Schaum mit einem relativ niedrigen Elastizitätsmodul im Bereich von etwa 10⁵ Nm⁻² bei gleichzeitig akzeptabel hohem Verlustfaktor erhalten. Unter Verwendung von diesem Schaum konnte eine deutliche Verbesserung der Schalldämmwerte im niederfrequenten Bereich erreicht werden, ohne daß man dabei zu große Verschlechterungen im hochfrequenten Bereich in Kauf hinnehmen mußte.

Bei Schallisotationsteilen gemäß diesem bekannten Stand der Technik wurde bisher Wert darauf gelegt, daß im Frequenzbereich von unter 300 Hz Schalldämmeinbrüche gegenüber der Dämmung eines nackten Karosseriebleches durch die Masse-Feder-Systeme vermieden werden. Der Frequenzbereich von unter 300 Hz wird insbesondere bei Vierzylinder-Fahrzeugen durch die drehzahlabhängige Zündfrequenz häufig zum Dröhnen angeregt.

Vierzylinder-Fahrzeuge der neueren Generation sowie auch mehrzylindrige Ausführungen wie z.B. Sechszylinder kennen die Dröhngeräusche nicht mehr bzw. diese treten nur noch stark vermindert auf. Statt dessen treten zunehmend hochfrequente Geräusche im Frequenzbereich ab 300 Hz störend in Erscheinung.

In dem Frequenzbereich ab 300 Hz weisen herkömmliche, als akustische Feder in Masse-Feder-Systemen verwendete Polyurethanschaumqualitäten Nachteile im Hinblick auf Schallisolationsteile auf, bei denen als akustische Feder Vliesstoffe verwendet werden.

Die in letztgenannten Systemen als akustische Feder verwendeten Vliesstoffe sind sehr weich, was zu einem guten akustischen Dämmverhalten bei Masse-Feder-Systemen führt.

Die Weichheit der Vliesstoffe vermittelt jedoch dem Fahrzeuginsassen nach dem Aufsetzen der Füße das Gefühl, auf einen "schwammigen Boden" zu treten. Dieser Umstand wird als unangenehm empfunden. Weiterhin führt diese Weichheit der Vliesstoffe durch die Trittbelastung in kürzester Zeit zu einer Verdichtung der Vliesstruktur. Die verdichtete Vliesstruktur weist jedoch naturgemäß erheblich verschlechterte schalldämmende Eigenschaften auf. Masse-Feder-Systeme, deren akustische Feder aus einem Vliesstoff gefertigt ist, gewährleisten mithin keine Langzeitstabilität.

Bei Schallsiolationsteilen mit derart weichen akustischen Federn werden deshalb in der Regel in Bereichen, die eine erhöhte Trittfestigkeit erfordern, sogenannte Einleger unterhalb der akustischen Masse (d.h. der luftschalldämmenden Schwerschicht mit Teppichkaschierung) angeordnet. Dies erfordert jedoch die Verwendung anderer Materialien, wie z. B. von Hartschäumen oder geschäumtem Polystyrol. Die Verwendung verschiedenartiger Materialien bei der Herstellung von Schallisolationsteilen erschwert insgesamt ein späteres Recycling der Schallisolationsteile. Weiterhin führt die Verwendung von verschiedenartigen Materialien bei der Herstellung von Schallisolationsteilen mit dem vorgenannten Aufbau zu zusätzlichen Arbeitsschritten im Produktionsprozeß.

Die Verwendung von weichen akustischen Federn führt jedoch vorteilhaft zu einer Verringerung des Gewichtes des Schallisolationsteils. Mit diesen Gewichtseinsparungen sind ökonomische und ökologische Vorteile im Fahrzeugbau, insbesondere bei Personenkraftwagen, verbunden. Diese mit der Nutzung leichterer und weicherer akustischer Federn verbundenen Vorteile schienen bislang mit dem oben genannten Nachteil einer geringen mechanischen Beständigkeit unabänderlich verbunden.

Aus der US 4,529,639-A ist ein Teppichteil bekannt, das zu Gewichtseinsparungszwecken aus einer Dämmschicht mit aufkaschiertem Teppich, also als einschichtiges Schallisolationselement ausgebildet ist, das an bestimmten einem Karosserieverlauf angepassten Stellen kissenartige Anschäumungen aufweist, wobei es Sich um ein Gemisch von Polyol und Isocyanat handeln kann. Durch Verwendung unterschiedlicher Mischungen bei den kissenartigen Anschäumungen können physikalische Eigenschaften des Schaumes und damit des Endproduktes beeinflusst werden, wie Dichte, Flexibilität, Schalldämmung. Wie gezielt örtlich partielle Trittfestigkeit ohne Änderung der Schalldämmung gegenüber einem Schallisolationsteil ohne partieller Trittfestigkeit erreicht werden kann, ist nicht angegeben.

Die Aufgabe der Erfindung ist es daher, ein Schallisolationsteil bereitzustellen, das sowohl leichtgewichtig ist als auch eine partielle Trittfestigkeit aufweist, wobei die im vorgenannten Stand der Technik vorhandenen Nachteile vermieden werden.

Die Aufgabe wird durch Bereitstellung eines Schallisolationsteils mit den Merkmalen gemäß Patentanspruch 1 gelöst. Bevorzugte Ausführungsformen sind in den Unteransprüchen 2-4 beschrieben.

Weiterhin wird die Aufgabe durch Bereitstellung eines Verfahrens zur Herstellung des vorgenannten Schallisolationsteils mit den Merkmalen gemäß Patentanspruch 5 gelöst. Eine bevorzugte Ausführungsform ist in dem Unteranspruch 6 beschrieben.

Unter "Polyol" ist im Sinne der Erfindung eine organisch-chemische Verbindung zu verstehen, die wenigstens zwei Hydroxygruppen aufweist. Die Verbindung kann mithin auch drei, vier oder mehr Hydroxygruppen aufweisen.

Im Sinne der Erfindung ist unter "Isocyanat" eine organisch-chemische Verbindung zu verstehen, die eine, zwei, drei oder mehr Isocyanatgruppen aufweisen kann.

Erfindungsgemäß wird unter dem Begriff "Zwei-Komponenten-Polyurethanschaum" ein Schaum verstanden, der aus den Grundkomponenten "Polyol" und "Isocyanat" hergestellt wird, wobei selbstverständlich ist, daß anstelle eines Polyols bzw. eines Isocyanats jeweils ein Gemisch aus verschiedenen Polyolen bzw. Isocyanaten verwendet werden kann. Weiterhin kann ein "Zwei-Komponenten-Poyurethanschaum" die üblichen Hilfsstoffe wie Katalysatoren, Emulgatoren, Schaumstabilisatoren, Pigmente, Treibmittel, Alterungs- und Flammschutzmittel, etc. enthalten.

Unter einer "Reaktionsmischung" wird im Sinne der Erfindung die aus Polyol und Isocyanat und gegebenenfalls" weiteren Hilfsstoffen bestehende Mischung verstanden, aus der durch Umsetzung der gewünschte Polyurethanschaum entsteht.

Das als akustisch wirksames Masse-Feder-System ausgebildete Schallisolationsteil gemäß der Erfindung umfaßt wenigstens einen Bereich bzw. mehrere Bereiche mit erhöhter Trittfestigkeit sowie an den Bereich bzw. an diese Bereiche angrenzende Bereiche mit normaler bzw. geringer Trittfestigkeit. Beispielsweise kann eine textile Flächenverkleidung für den Fahrgastraum im Fußbereich eine erhöhte Trittfestigkeit aufweisen. Die beispielsweise an den Fußbereich angrenzenden Bereiche der Flächenverkleidung, die beispielsweise die Mittelkonsole oder die Seitenwände des Fahrgastraumes, etc. abdecken, können dabei keine erhöhte Trittfestigkeit aufweisen.

Die vorliegende Erfindung ermöglicht somit die Bereitstellung eines einstückig ausgebildeten Schallisolationsteiles, bei dem ein ausgewählter Bereich bzw. mehrere ausgewählte Bereiche eine erhöhte Trittfestigkeit aufweisen. Die Bereiche mit erhöhter Trittfestigkeit unterscheiden sich von den angrenzenden Bereichen mit normaler bzw. geringer Trittfestigkeit durch ein geändertes Mischungsverhältnis von Polyol zu Isocyanat in der Reaktionsmischung für die Herstellung der akustischen Feder.

D.h., die gesamte akustische Feder des Schallisolationsteil ist aus den gleichen chemischen Ausgangsstoffen, d.h. Polyol bzw. Isocyanat aufgebaut. Wie vorstehend ausgeführt, unterscheiden sich die verschiedenen Bereiche des Schallisolationsteils im Hinblick auf die mengenmäßigen Anteile von Polyol und Isocyanat in der Reaktionsmischung. Insofern entfällt bei der Entsorgung des erfindungsgemäßen Schallisolationsteils der bei herkömmlichen Schallisolationsteilen erforderliche aufwendige Trennungsschritt der oder des trittfesten Bereiche(s) von den übrigen Bereichen.

Bei der Entsorgung von Kraftfahrzeugen fallen sehr große Mengen von Flächenverkleidungen aus dem Fahrgastraum an. Im Hinblick auf die vorliegende Erfindung wird das Entsorgen dieser Flächenverkleidungen stark vereinfacht und dadurch insbesondere auch eine zuverlässige Entsorgung gewährleistet. Eine fehlerhafte Entsorgung der die akustische Feder aufbauenden Materialien, beispielsweise durch Vermischen der verschiedenen Materialien, kann bei der Entsorgung des Schallisolationsteils gemäß der Erfindung nicht erfolgen, da die akustische Feder durchgängig aus Polyurethan aufgebaut ist und im ganzen Stück entsorgt werden kann. Die vorliegende Erfindung stellt somit sowohl in ökonomischer als auch in ökologischer Hinsicht einen bedeutenden Fortschritt dar.

Weiterhin vereinfacht das Schallisolationsteil gemäß der Erfindung nicht nur die Entsorgung, sondern vereinfacht auch den Herstellungsprozeß. Die Verwendung von gleichen chemischen Ausgangsmaterialien bei der Herstellung von Schallisolationsteilen, sowohl für Bereiche mit erhöhter Trittfestigkeit als auch für Bereiche mit normaler bzw. geringer Trittfestigkeit, führt zu einer Verringerung der Anzahl der bei der Herstellung von Schallisolationsteilen erforderlichen Ausgangsstoffe. Dies vereinfacht die Prozeßführung beträchtlich. Da weiterhin eine verringerte Anzahl von Ausgangsstoffen auch die erforderliche Lagerhaltung vereinfacht, führt die Erfindung somit auch zu einer Verringerung der Herstellungskosten.

Mit anderen Worten, der Hersteller hat sowohl bei der Herstellung als auch bei der Entsorgung von Schallisolationsteilen gemäß der Erfindung einen ökonomischen Vorteil.

Aus ökologischen Gründen wird heutzutage allgemein gefordert, daß die Verwendung von Verbundstoffen aus verschiedenen Kunststoffmaterialien, die, wenn überhaupt, nur nach einer aufwendigen Trennung in die einzelnen Bestandteile einem Verwertungsprozeß wieder zuführen werden können, verringert wird. Insofern stellt die vorliegende Erfindung auch in dieser Hinsicht einen bedeutenden Fortschritt dar. Die Schallisolationsteile gemäß der vorliegenden Erfindung können, gegebenenfalls nach Abtrennung des aufkaschierten Teppichs oder Belags, in einem einzigen Schritt ohne weiteren Trennungsschritt einer Polyurethanaufbereitung zugeführt werden.

Die Bereiche mit erhöhter Trittfestigkeit werden bei dem Schallisolationsteil gemäß der Erfindung erzeugt, indem bei Verwendung der gleichen Ausgangsstoffe zur Herstellung des Polyurethan-Schaumes das Mischungsverhältnis zwischen Polyol und Isocyanat in der Reaktionsmischung, verglichen mit dem Mischungsverhältnis der Reaktionsmischung zur Herstellung der angrenzenden Bereichen mit normaler bzw. geringer Trittfestigkeit, geändert wird. Bevorzugt wird dabei der Anteil des Isocyanats in der Reaktionsmischung zur Herstellung des Bereiches mit erhöhter Trittfestigkeit erhöht. Dadurch wird eine stärkere Vernetzung von Polyol und Isocyanat erreicht, die dann zur Ausbildung eines Polyurethanschaumes mit größerer mechanischer Beständigkeit, d.h. erhöhter Trittfestigkeit führt.

Beispielsweise kann das Mischungsverhältnis von Polyol zu Isocyanat in der Reaktionsmischung zur Herstellung des Bereiches mit erhöhter Trittfestigkeit 100:62 Teile betragen, wohingegen das Mischungsverhältnis in der Reaktionsmischung zur Herstellung der angrenzenden Bereiche von Polyol zu Isocyanat 100:45 Teile betragen kann.

Wird das Mischungsverhältnis in der Reaktionsmischung von Polyol zu Isocyanat beispielsweise von 100:45 Teile auf 100:55 Teile verändert, so steigt der Elastizitätsmodul auf den vierfachen Wert. Beispielsweise beträgt bei einem Mischungsverhältnis von Polyol zu Isocyanat in der Reaktionsmischung von 100:45 Teilen der Elastizitätsmodul des erhaltenen Polyurethanschaumes 71.000 N/m², und bei einem Mischungsverhältnis von Polyol zu Isocyanat von 100:55 Teilen beträgt der Elastizitätsmodul des erhaltenen Polyurethanschaumes 287.000 N/m².

Selbstverständlich können auch andere Mischungsverhältnisse von Polyol zu Isocyanat in der Reaktionsmischung eingestellt werden. Wesentlich ist, daß sich das Mischungsverhältnis von Polyol zu Isocyanat in der Reaktionsmischung zur Herstellung des Bereiches mit erhöhter Trittfestigkeit von dem entsprechenden Mischungsverhältnis in der Reaktionsmischung zur Herstellung der an den Bereich mit erhöhter Trittfestigkeit angrenzenden Bereiche unterscheidet.

Es ist offensichtlich, daß beispielsweise das Mischungsverhältnis von Polyol zu Isocyanat in der Reaktionsmischung zur Herstellung eines Bereiches mit erhöhter Trittfestigkeit in der Fahrgastzelle eines PKWs, auf dem regelmäßig nur die Füße der Fahrer bzw. der Mitfahrer abgestellt werden, und das einer Reaktionsmischung zur Herstellung eines Bereiches mit erhöhter Trittfestigkeit in dem Flur eines Reisebusses, auf dem die Fahrgäste entlang laufen, voneinander verschieden sind. D.h., wenn der Bereich mit erhöhter Trittfestigkeit voraussichtlich größeren Belastungen ausgesetzt sein wird, wird der Anteil der Isocyanatkomponente in der Reaktionsmischung entsprechend diesen Erfordernissen erhöht.

In Abhängigkeit von dem in der Reaktionsmischung zur Herstellung des Bereiches mit erhöhter Trittfestigkeit verwendeten Polyol und Isocyanat tritt ab einem bestimmten Mischungsverhältnis von Polyol zu Isocyanat keine weitere wesentliche Verbesserung der mechanischen Beständigkeit des Polyurethanschaums mehr ein. Vielmehr ist ab einem bestimmten Vernetzungsgrad das Dämmverhalten des erhaltenen Polyurethanschaums nicht mehr zufriedenstellend.

Dieser Punkt, bei dem eine weitere Erhöhung des Isocyanatanteils in der Reaktionsmischung im Hinblick auf die einzustellenden Parameter "Trittfestigkeit" und "Dämmverhalten" nicht mehr vorteilhaft ist, hängt von den jeweils verwendeten Polyol- bzw. Isocyanatkomponenten ab. Die bei der Herstellung des Bereichs mit erhöhter Trittfestigkeit verwendeten Mischungsverhältnisse von Polyol zu Isocyanat, die zu einem Polyurethanschaum mit erhöhter Trittfestigkeit bei gleichzeitig gutem Dämmverhalten führen, können experimentell ohne weiteres ermittelt werden.

Bei einer bevorzugten Ausführungsform der Erfindung wird ein leichtgewichtiger Polyurethanschaum mit einer Dichte von nicht mehr als etwa 70 kg/m³, insbesondere mit einer Dichte zwischen etwa 50 und etwa 70 kg/m³, und am meisten bevorzugt mit einer Dichte von etwa 60 kg/m³ verwendet.

Verglichen mit gegenüber herkömmlicherweise bei der Herstellung von Schallisolationsteilen verwendeten Schäumen, die eine Dichte von etwa 80 bis 120 kg/m³ aufweisen, führt die Verwendung der Polyurethanschäume mit einer Dichte von nicht mehr als etwa 70 kg/m³ zu einer bedeutenden Gewichtseinsparung. Diese Gewichtseinsparung erleichtert die Handhabung der Schallisolationsteile beispielsweise beim Einbau in Kraftfahrzeuge.

Gemäß einer weiteren bevorzugten Ausführungsform haben der mindestens eine örtlich begrenzte Bereich und die angrenzenden Bereiche in etwa die gleiche Dichte.

Äußerst vorteilhaft ist somit das erfindungsgemäße Schallisolationsteil durchweg leichtgewichtig. Da der Kraftstoffverbrauch mit zunehmendem Gewicht eines Kraftfahrzeuges steigt, ist die Bereitstellung eines durchgängig leichtgewichtigen Schallisolationsteils ein wichtiger Beitrag zur Senkung des durchschnittlichen Kraftfahrzeuggewichtes und damit letztendlich zur Senkung des durchschnittlichen Kraftstoffverbrauches.

Weiterhin ist bevorzugt, daß der Flächenanteil des mindestens einen örtlich begrenzten Bereiches etwa 20% der Gesamtfläche nicht überschreitet.

Wird beispielsweise eine Schallisolation mit integriertem Teppich (Teppichkompaktisolation) so ausgeführt, daß über die Fläche betrachtet, etwa 20% der Fläche mit härterem Polyurethanschaum, d.h. einem Polyurethanschaum mit größerer Steifigkeit bzw. Stauchhärte, ausgerüstet sind, wird die Schalldämmung insgesamt in Abhängigkeit von der Frequenz praktisch nicht verschlechtert. Die Reaktionsmischung zur Herstellung des härteren Polyurethanschaumes weist dabei einen größeren Anteil an Isocyanat auf, verglichen mit der Reaktionsmischung zur Herstellung der angrenzenden Bereiche mit normaler bzw. geringer Trittfestigkeit.

Selbstverständlich kann der Flächenanteil des mindestens einen örtlich begrenzten Bereiches auch etwa 20% der Gesamtfläche überschreiten, wenn eine gewisse Verschlechterung des Schallisolationsvermögens des Schallisolationsteils in Kauf genommen wird.

Gemäß einer weiteren bevorzugten Ausführungsform ist zwischen der Dämmschicht (Schwerschicht) und dem Polyurethanschaum eine Vlieslage (Vliesstoff) angeordnet. Die Anordnung einer dünnen Vlieslage zwischen der Dämmschicht (Schwerschicht) und dem Polyurethanschaum bzw. zwischen der Teppichschicht und dem Polyurethanschaum bewirkt eine gewisse schäumhemmende oder kollabierende Wirkung, wodurch größere Schaumdichten erhalten werden.

Diese größeren Schaumdichten sind vorteilhaft, weil sie die mechanische Festigkeit in dem Bereich mit erhöhter Trittfestigkeit weiter verbessern können. Bevorzugt sind die Vliesstoffe dabei aus Polyurethanfasern hergestellt. Natürlich kann der Vliesstoff auch aus allen herkömmlichen Materialien gefertigt sein. Die Flächenmasse des Vliesstoffes kann beispielsweise zwischen etwa 10 und etwa 1000 g/m² liegen. Bevorzugt liegt die Flächenmasse zwischen etwa 50 und etwa 500 g/m², noch bevorzugter zwischen etwa 70 und etwa 200 g/m².

Als luftschalldämmende Dämm- bzw. Schwerschichten, auf die einerseits der Teppich als Dekor aufkaschiert ist und andererseits unterseitig die Hinterschäumung mit der oben genannten Reaktionsmischung aus Polyol und Isocyanat erfolgt, kommen bevorzugt Flächenmassen zwischen etwa 2,0 und etwa 5,0 kg/m², insbesondere zwischen etwa 3,0 und etwa 5,0 kg/m², und besonders bevorzugt zwischen etwa 4,0 und etwa 5,0 kg/m² in Frage.

Gemäß dem erfindungsgemäßen Verfahren zur Herstellung eines als akustisch wirksames Masse-Feder-System ausgebildeten Schallisolationsteils werden die Flüssigkeitskomponenten für den mindestens einen örtlich begrenzten Bereich und die Flüssigkeitskomponenten für die angrenzenden Bereiche, die zueinander unterschiedliche Mischungsverhältnisse der beiden Komponenten in der Reaktionsmischung haben, gleichzeitig in eine Form, in die die Dämmschicht und gegebenenfalls die Vlieslage eingelegt ist, eingespritzt.

Das Mischen der Flüssigkeitskomponenten in den unterschiedlichen Mischungsverhältnissen kann dabei vor dem Einspritzen, während des Einspritzens oder unmittelbar in der Form erfolgen. Wesentlich ist lediglich, daß sich Polyol und Isocyanat vor der Umsetzung gut mischen. Die Einstellung der Schaumdichten, d.h. insbesondere von niedrigen Schaumdichten, bei Polyurethanschäumen ist einerseits durch die gewählte Zusammensetzung, beispielsweise durch den Anteil an Treibmitteln, und andererseits durch die Prozeßführung möglich.

Als Polyol bzw. Isocyanat können sämtliche Verbindungen verwendet werden, die herkömmlicherweise bei der Herstellung von einem Zweikomponenten-Polyurethanschaum verwendet werden.

Beispielsweise kann das Isocyanat aus der Gruppe, die aus 2,4-Toluoldiisocyanat, 2,6-Toluoldiisocyanat, 4,4'-Methylendi(phenylisocyanat), Hexamethylendiisocyanat, Phenylen-1,4-diisocyanat, Phenylen-1,3-diisocyanat, Biphenyl-4,4'-isocyanat, Naphthalin-1,5-diisocyanat, Isophorondiisocyanat, Hexan-1,6-diisocyanat oder Mischungen davon besteht, ausgewählt werden.

Das Polyol kann beispielsweise aus der Gruppe, die aus Polyalkylenglykolether, Polyetherpolyolen, die aus zwei- und mehrwertigen Alkoholen und Epoxiden wie Propylen- und/oder Ethylenoxid einfach hergestellt werden können, Polyesterpolyolen, Diolen (Dialkoholen) wie z.B. 1,4-Butylenglykol, mehrwertige Alkohole wie z.B. Glycerin, Copolymeren aus Diol und Dicarbonsäure wie z.B. aus Ethylenglykol und Adipinsäure, oder Mischungen davon besteht, ausgewählt werden.

Bei der Herstellung des Polyurethanschaumes können beispielsweise die oben erwähnten üblichen Hilfsstoffe zugesetzt werden. Die Herstellung der Polyurethanschäume kann weiterhin beispielsweise mittels Reaktionsspritzguß (RIM-Technik, reaction injection moulding) erfolgen. Selbstverständlich können aber auch alle weiteren üblichen Verfahren die zur Herstellung von Polyurethanschaum geeignet sind, verwendet werden.

Dem Fachmann sind beispielsweise aus der EP-0 334 178 ("Aufbau zur Schallisolation, Verfahren zu seiner Herstellung und seine Verwendung" (Ambivalentsystem, Firma Stankiewicz GmbH) Schäumtechniken bekannt, bei denen bei Masse-Feder-Systemen auf locker strukturierte Materialien, wie beispielsweise einem Vliesstoff, geschäumt wird, die unterhalb der Schwerschicht (akustische Masse) angeordnet sind. Durch Kollabieren des Schaumes in den lockeren Strukturen wird bei Weiterschäumen im geschlossenen Werkzeug die Dichte des sich anschließenden zelligen Schaumes im Sinne einer Verringerung des spezifischen Gewichtes beeinflußt.

Wie bereits oben ausgeführt, werden bei einer bevorzugten Ausführungsform der Erfindung leichtgewichtige Polyurethanschäume mit einer Dichte (spezifischen Gewicht) zwischen etwa 50 und etwa 70 kg/m³ verwendet. In Abhängigkeit von der Prozeßführung beim Schäumen der Polyurethanschäume können dabei dynamische Elastizitätsmodule von < 80.000 N/m² erreicht werden. Vorteilhaft sind aber auch dynamische Elastizitätsmodule von <50.000 N/m².

Mit diesen niedrigen Elastizitätsmodulen werden auch niedrige Stauchhärten erreicht, die deutlich unterhalb von 5.500 N/m² liegen, bevorzugt aber unterhalb von 3.000 N/m². Die Stauchhärten werden dabei nach DIN EN ISO 3386 "Bestimmung der Druckspannungs-Verformungseigenschaften" bestimmt.

Der Verlustfaktor, gemessen gemäß DIN 53426 "Bestimmung des dynamischen Elastizitätsmoduls und des Verlustfaktors nach dem Vibrometerverfahren", wobei diese Werte den Werten aus dem Biegeschwingungsversuch nach DIN 53440 proportional sind, ist für die Masse-Feder-Systeme der erfindungsgemäßen Art nicht mehr von ausschlaggebender Bedeutung, da vorliegend eine verbesserte Wirkung im Hinblick auf herkömmliche Schäume im Frequenzbereich oberhalb von 300 Hz erreicht wird. Gleichwohl sollte der Verlustfaktor im Bereich von etwa 0,2 bis 0,3 liegen, um spürbare Nachteile im tieffrequenten Zündfrequenzbereich, d.h. unterhalb von 300 Hz zu vermeiden.

Gemäß einer weiteren bevorzugten Ausführungsform ist der mindestens eine örtlich begrenzte Bereich durch in der Form eingebrachte Plättchen aus Kunststoff oder Metall geometrisch begrenzt und/oder jeweils mehrere Mischköpfe zum Einspritzen in den mindestens einen örtlich begrenzten Bereich und in die angrenzenden Bereiche so angeordnet und ausgebildet, daß das Mischungsverhältnis der beiden Komponenten in der Reaktionsmischung jeweils unterschiedlich einstellbar ist.

Bei entsprechender Anordnung und Steuerung der Mischköpfe in bzw. an der Form, können der mindestens eine örtlich begrenzte Bereiche mit erhöhter Trittfestigkeit sowie die daran angrenzenden Bereiche mit normaler bzw. geringer Trittfestigkeit ohne weitere Hilfsmittel in dem herzustellenden Schallisolationsteil erzeugt werden. Beispielsweise kann über die Einspritzzeiten bzw. die Zeitpunkte, an denen die Reaktionsmischungen mit unterschiedlichen Mischungsverhältnissen von Polyol zu Isocyanat der Form zugeführt werden, der flächenmäßige Anteil der jeweiligen Bereiche in dem herzustellenden Schallisolationsteil eingestellt werden.

Bei einer bevorzugten Ausführungsform können durch Anordnung von Plättchen aus Kunststoff oder Metall, wie beispielsweise aus Stahl, in der Form oder dem geschlossenen Werkzeug Bereiche geometrisch begrenzt werden. In den geometrisch begrenzten Bereich sowie in die angrenzenden Bereiche werden mit Hilfe mehrerer Mischköpfe die flüssigen Polyol- sowie Isocyanat-Komponenten samt der gegebenenfalls verwendeten Zusatzstoffe, die oben bereits aufgeführt wurden, eingebracht.

Durch diese Maßnahme werden in dem erfindungsgemäßen Schallisolationsteil definierte Bereiche mit höherer Trittfestigkeit, verglichen mit den angrenzenden Bereichen, erzeugt. Da nicht Reaktionsmischungen mit verschiedenen Komponenten verwendet werden müssen, um Polyurethanschäume mit höherer bzw. normaler oder geringer Trittfestigkeit zu erzeugen, sondern lediglich das Mischungsverhältnis zwischen Polyol- und Isocyanat in der Reaktionsmischung geändert werden muß, gestalten sich die Prozeßführung und der maschinelle Aufwand einfach.

Nach dem Entformen des Schallisolationsteils sind die Bereiche unterschiedlicher Festigkeit bzw. Stauchhärte sichtbar, weil die im Werkzeug angeordneten Plättchen Perforierungen im Gesamtschaumbild hinterlassen.

Beispielrezeptur zur Herstellung eines Polyurethanschaums

### Polyolkomponente: (A-Komponente)

100 Teile trifunktionelles Polyetherpolyol, MG 4800, OHZ 35 wie z. B. Desmophen 3900, Fa. Bayer
1 Teil Wasser
1,6 Teile tertiäres Amin 1 wie z. B. Dimethylethanolamin (DMEA)
0,4 Teile tertiäres Amin 2 wie z. B. 1,4-Diazabicyclo[2,2,2]octan

### Isocyanatkomponente (B-Komponente)

4,4 Methylendi(phenylisocyanat) (MDI, NCO 31) wie z. B. Desmodur 44V20, Fa. Bayer

Kennzahl 100 A:B = 100:13

Ein Verschäumen ist in einem Kennzahlbereich von 50-120 möglich.

Allgemein werden die in der Regel flüssigen Rohstoffe meistens bei Zimmertemperatur vermischt. Dabei werden bestimmte stöchiometrische Verhältnisse eingehalten. Die vorstehende Kennzahl gibt dabei das prozentuale Verhältnis der tatsächlich eingesetzten Isocyanat-Menge zur stöchiometrisch, d.h. berechneten Isocyanat-Menge an.

Bei einer Kennzahl von 100 entspricht die eingesetzte Isocyanat-Menge der berechneten Menge. Bei einer Kennzahl von 110 ist die eingesetzte Isocyanat-Menge 10 % höher als die berechnete Menge. Bei einer Kennzahl von 90 ist die eingesetzte Isocyanat-Menge 10 % niedriger als die berechnete Menge.

Nachfolgend wird die vorliegende Erfindung unter Bezugnahme auf die Figuren näher veranschaulicht.

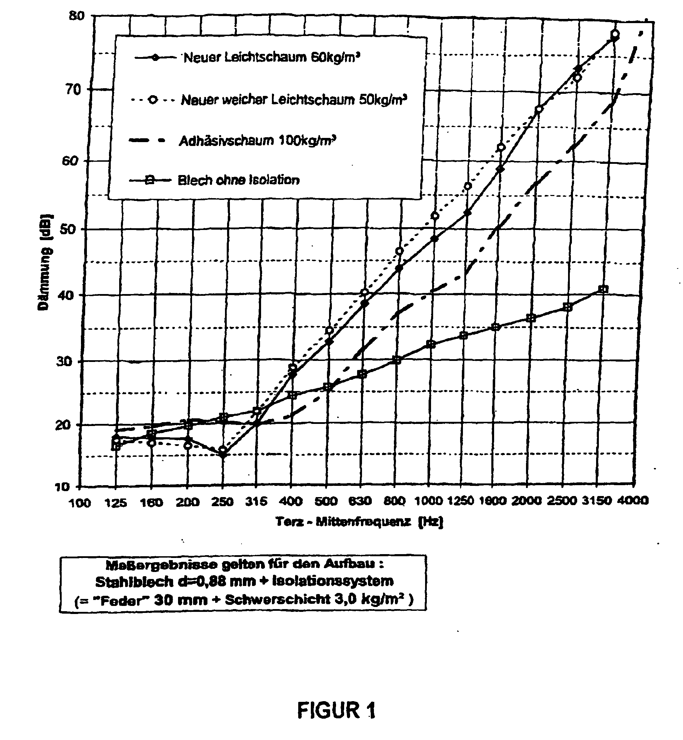

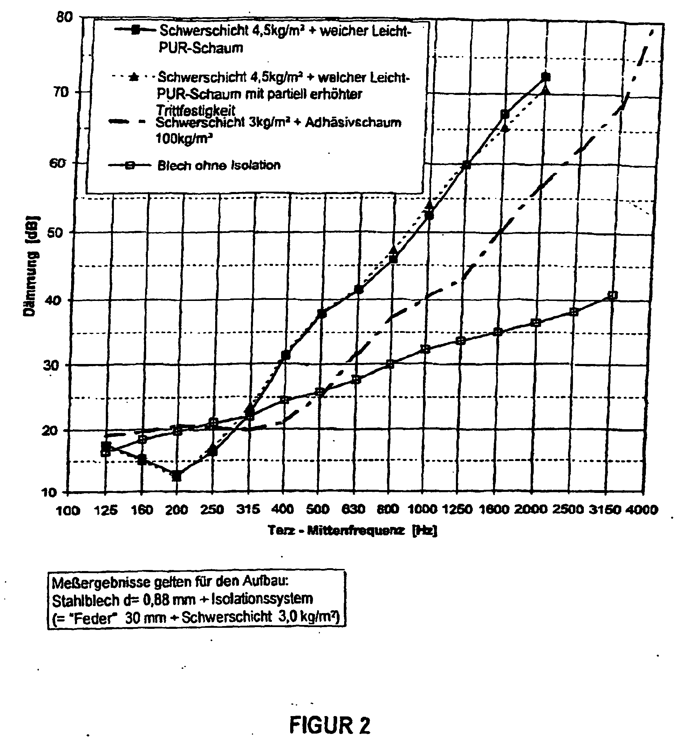

Dabei zeigen Figuren 1 und 2 den frequenzabhängigen Verlauf der Schalldämmung verschiedener Masse-Feder-Systeme im Vergleich zur Dämmung eines Stahlbleches von 0,88 mm Dicke (sog. Karosserieblech); und

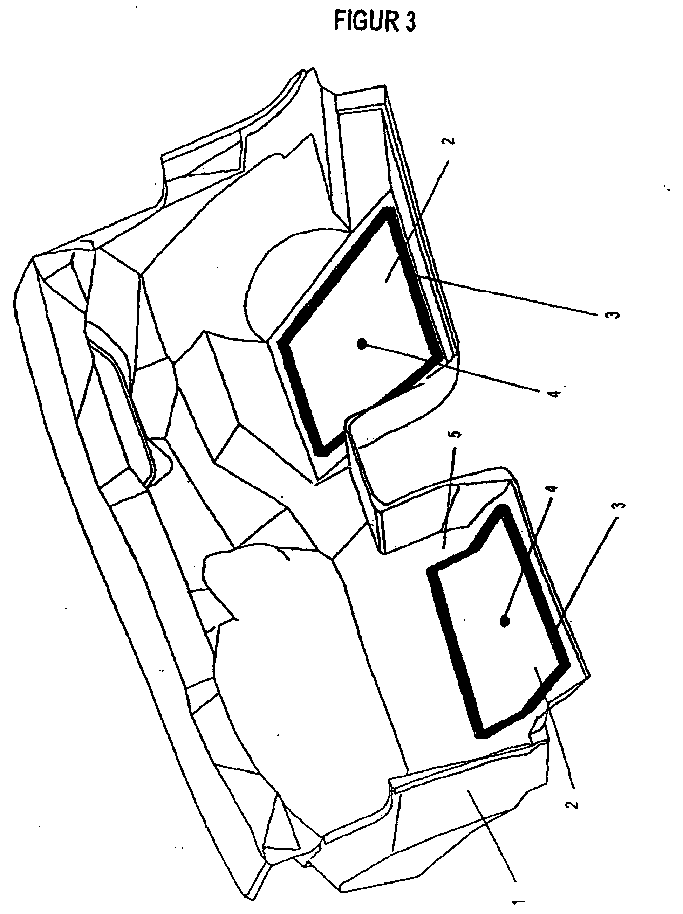

Figur 3 die Darstellung eines Werkzeuges zur Herstellung einer Stirnwandisolation eines Kraftfahrzeuges.

In Figur 1 sind die Dämmverläufe für Masse-Feder-Systeme mit Polyurethanschaumdichten (neuer Leichtschaum BarySorb 3192/1.VP19) von 50 und 60 kg/m³ im Vergleich zu einem herkömmlichen Schaum ("Adhäsivschaum") mit einer Dichte von 100 kg/m³ gezeigt. Sowohl bei den Masse-Feder-Systemen mit einer Schaumdichte von 50 (gestrichelte Linie) bzw. 60 kg/m³ (dünne durchgezogene Linie) als auch bei dem Vergleichsbeispiel (Schaumdichte 100 kg/m³) (dicke durchgezogene Linie) wurde als akustische Feder jeweils eine Schaumschicht mit einer Dicke von 30 mm verwendet, die jeweils mit einer Schwerschicht von 3,0 kg/m³ abgedeckt wurde. Die Schäume weisen über die gesamte Prüffläche einheitliche Trittfestigkeiten bzw. Steifigkeiten (Stauchhärten) auf. Die mit dem Symbol "B" gekennzeichnete Kurve gibt den Dämmverlauf eines Karrosserieblechs mit 0,88 mm Dicke wieder.

Im hochfrequenten Bereich oberhalb von 300 Hz ergibt sich für die leichteren Schäume verglichen mit herkömmlichem Schaum ein deutlich besseres Dämmverhalten.

In Figur 2 werden ein erfindungsgemäßes Schallisolationsteil mit partiell erhöhter Trittfestigkeit (Kurve ▲), ein Schallisolationsteil ohne erhöhte Trittfestigkeit (Kurve O), ein ungedämmtes Karosserieblech mit einer Dicke von 0,88 mm (Kurve □) sowie das bereits aus Figur 1 bekannte Schallisolationsteil mit einer Schaumdichte ("Adhäsivschaum") von 100 kg/m³ (dicke durchgezogene Linie) verglichen. Sowohl das erfindungsgemäße Schallisolationsteil mit partiell erhöhter Trittfestigkeit (Kurve A) als auch das Schallisolationsteil ohne erhöhte Trittfestigkeit (Kurve O) weisen beide als akustische Feder eine Polyurethan-Schaumschicht mit einer Dicke von 30 mm sowie als akustische Masse eine Schwerschicht (Ss) von 4,5 kg/m² auf.

Die Systeme besitzen eine gleichmäßige Steifigkeit über die gesamte Fläche mit normaler bzw. geringer Trittfestigkeit. Bei dem erfindungsgemäßen Schallisolationsteil sind etwa 20% der Fläche (außermittig, ca. 0,3m x 0,3m) aus einem Schaum mit deutlich höherer Stauchhärte gebildet, wobei diese Fläche auch eine gleichmäßige Steifigkeit aufweist.

Dabei betrug bei dem Schallisolationsteil mit durchgehend gleicher Stauchhärte (Kurve O) die Dichte des Polyurethanschaums 55 kg/m³ (weicher Leichtschaum VP 3119) und das Mischungsverhältnis in der Reaktionsmischung von Polyol zu Isocyanat 100 : 45 Teile (ISO 3230).

Bei dem erfindungsgemäßen Ausführungsbeispiel (Kurve ▲) betrug die Dichte des Polyurethanschaums des Schallisolationsteils auch 55 kg/m³ und das Mischungsverhältnis in der Reaktionsmischung von Polyol zu Isocyanat 100 : 45 Teile (weicher Leichtschaum VP 3119 - ISO 3230) für den Bereich mit normaler bzw. geringer Trittfestigkeit und 100 : 62 Teile (weicher Leichtschaum VP 3119 - ISO 3230) für den Bereich mit erhöhter Trittfestigkeit (20 % der Fläche).

Die mit B gekennzeichnete Kurve (Kurve □) gibt den Dämmverlauf eines Karrosserieblechs mit 0,88 mm Dicke wieder.

Figur 2 ist zu entnehmen, daß das erfindungsgemäße Schallisolationsteil mit partieller Trittfestigkeit ein Dämmvermögen aufweist, das dem eines Schallisolationsteils ohne erhöhte Trittfestigkeit entspricht. Weiterhin weist das erfindungsgemäße Schallisolationsteil ein gegenüber herkömmlichen Schallisolationsteilen deutlich verbessertes Dämmvermögen auf.

Figur 3 zeigt die Darstellung eines Werkzeuges (1) zur Herstellung einer erfindungsgemäßen leichtgewichtigen Schallisolation mit partieller Trittfestigkeit im Stirnwandbodenbereich eines Personenkraftfahrzeuges. In dem Werkzeug (1) sind zwei Rahmen (3) zur Herstellung eines örtlich begrenzten Bereiches (2) mit erhöhter Trittfestigkeit angeordnet. Der Rahmen (3), der zu Veranschaulichungszwecken durchgehend gezeichnet ist, kann aus einzelnen Plättchen bestehen, die den herzustellenden trittfesten Bereich (2) gegenüber den angrenzenden Bereichen abgrenzen. In diesem örtlich abgegrenzten Bereich (2) werden bei der Herstellung der Stirnwandisolation Polyol und Isocyanat in einem, bezogen auf die angrenzenden Bereiche, unterschiedlichen Mischungsverhältnis eingespritzt. Somit wird ein als Stirnwandisolation ausgebildetes Schallisolationsteil mit einem Zweikomponenten-Polyurethanschaum bereitgestellt, bei dem örtlich begrenzte Bereiche (2) verglichen mit den angrenzenden Bereichen (5) ein größere Stauchhärte, d.h. eine erhöhte Trittfestigkeit aufweisen. Separate Einschüsse können bei (4) erfolgen. Bei der beispielhaften Ausführungsform dienen diese Bereiche (2) als Fußbereich in einer Fahrgastraumauskleidung.

## Patentansprüche

1. Als akustisch wirksames Masse-Feder-System ausgebildetes Schallisolationsteil, bei dem die Feder durch einen Zwei-Komponenten-Polyurethanschaum aus Polyol und Isocyanat und die Masse durch eine Dämmschicht mit oder ohne aufkaschiertem Teppich gebildet ist,
**dadurch gekennzeichnet,**
**dass** die Feder mindestens einen örtlich begrenzten Bereich aufweist, bei dem das Mischungsverhältnis von Polyol zu Isocyanat in der Reaktionsmischung von dem angrenzender Bereiche verschieden ist, derart, dass der mindestens eine örtlich begrenzte Bereich und die angrenzenden Bereiche in etwa die gleiche Dichte haben.

2. Schallisolationsteil nach Anspruch 1,
**dadurch gekennzeichnet,**
**dass** die Feder im Wesentlichen aus einem leichtgewichtigen Polyurethanschaum mit einer Dichte von nicht mehr als etwa 70kg/m³ besteht.

3. Schallisolationsteil nach einem der Ansprüche 1 bis 2,
**dadurch gekennzeichnet,**
**dass** der Flächenanteil des mindestens einen örtlich begrenzten Bereichs etwa 20% der Gesamtfläche nicht überschreitet.

4. Schallisolationsteil nach einem der Ansprüche 1 bis 3,
**dadurch gekennzeichnet,**
**dass** zwischen der Dämmschicht und dem Polyurethanschaum eine Vlieslage angeordnet ist.

5. Verfahren zur Herstellung eines als akustisch wirksames Masse-Feder-System ausgebildeten Schallisolationsteils nach einem der Ansprüche 1 bis 4,
**dadurch gekennzeichnet,**
**dass** die Flüssigkeitskomponenten für den mindestens einen örtlich begrenzten Bereich und die Flüssigkeitskomponenten für die angrenzenden Bereiche, die zueinander unterschiedliche Mischungsverhältnisse der beiden Komponenten in der Reaktionsmischung derart haben, dass der mindestens eine örtlich begrenzte Bereich und die angrenzenden Bereiche nach der Ausreagierung in etwa die gleiche Dichte haben, gleichzeitig in eine Form, in die die Dämmschicht und gegebenenfalls die Vliesanlage eingelegt ist, eingespritzt werden.

6. Verfahren nach Anspruch 5,
**dadurch gekennzeichnet,**
**dass** der mindestens eine örtlich begrenzte Bereich durch in der Form eingebrachte Plättchen aus Kunststoff oder Metall geometrisch begrenzt ist und/oder jeweils mehrere Mischköpfe zum Einspritzen in den mindestens einen örtlich begrenzten Bereich und in die angrenzenden Bereiche so angeordnet und ausgebildet sind, dass das Mischungsverhältnis der beiden Komponenten in der Reaktionsmischung jeweils unterschiedlich einstellbar ist.

## Claims

1. Sound damping member constructed as an acoustic mass-spring system, wherein the spring comprises two-component polyurethane foam made from polyol and isocyanate and the mass comprises a damping layer with or without carpet applied to it, **characterised in that** the spring has at least one locally restricted region, wherein the mixing ratio of polyol to isocyanate in the reaction mixture is different from that of the adjacent regions, such that the at least one locally restricted region and the adjacent regions have approximately the same density.

2. Sound damping member according to claim 1, **characterised in that** the spring substantially comprises a lightweight polyurethane foam with a density of not more than approximately 70 kg/m³.

3. Sound damping member according to one of the claims 1 or 2, **characterised in that** the proportional area of the at least one locally restricted region does not exceed approximately 20% of the total surface area.

4. Sound damping member according to one of the claims 1 to 3, **characterised in that** a fleece layer is arranged between the damping layer and the polyurethane foam.

5. Method for manufacturing a sound damping member constructed as an acoustically effective mass-spring system according to one of the claims 1 to 4, **characterised in that** the fluid components for the at least one locally restricted region and the fluid components for the adjacent regions, which have mutually different mixing ratios of the two components in the reaction mixture such that the at least one locally restricted region and the adjacent regions have approximately the same density after the reaction, are injection moulded simultaneously into a mould into which the damping layer and possibly the fleece layer is laid.

6. Method according to claim 5, **characterised in that** the at least one locally restricted region is geometrically limited by plates of plastics or metal introduced into the mould and/or a plurality of mixing heads for injection moulding into the at least one locally restricted region and into the adjacent regions are arranged and designed such that the mixing ratio of the two components in the reaction mixture is separately adjustable in each case.

## Revendications

1. Elément d'isolation phonique, réalisé sous la forme d'un système masse-ressort à action acoustique, dans lequel le ressort est formé par une mousse de polyuréthane à deux composants en polyol et isocyanate, et la masse est formée par une couche isolante avec ou sans tapis contrecollé, **caractérisé en ce que** le ressort présente au moins une zone limitée localement dans laquelle le rapport du mélange de polyol et d'isocyanate dans le mélange réactif est différent de celui des zones adjacentes, de manière que la au moins une zone limitée localement et les zones adjacentes aient approximativement la même densité.

2. Elément d'isolation phonique selon la revendication 1, **caractérisé en ce que** le ressort est constitué pour l'essentiel d'une mousse de polyuréthane légère d'une densité non supérieure à environ 70 kg/m³.

3. Elément d'isolation phonique selon l'une des revendications 1 ou 2, **caractérisé en ce que** la part de la surface de la au moins une zone limitée localement ne dépasse pas environ 20 % de la surface totale.

4. Elément d'isolation phonique selon l'une des revendications 1 à 3, **caractérisé en ce qu'**une couche de non-tissé est disposée entre la couche isolante et la mousse de polyuréthane.

5. Procédé de fabrication d'un élément d'isolation phonique, réalisé sous la forme d'un élément masse-ressort à action acoustique selon l'une des revendications 1 à 4, **caractérisé en ce que** les composants liquides pour la au moins une zone limitée localement et les composants liquides pour les zones adjacentes qui présentent des rapports différents du mélange des deux composants dans le mélange réactif, de manière que la au moins une zone limitée localement et les zones adjacentes présentent approximativement la même densité après réaction, sont injectés simultanément dans un moule dans lequel est placée la couche isolante et éventuellement la couche de non-tissé.

6. Procédé selon la revendication 5, **caractérisé en ce que** la au moins une zone limitée localement est limitée géométriquement par des plaquettes en matière plastique ou métal, introduites dans le moule, et/ou plusieurs têtes de mélange pour l'injection dans la au moins une zone limitée localement et les zones adjacentes sont disposées et réalisées de manière que le rapport du mélange des deux composants dans le mélange réactif puisse être réglé différemment pour chacun d'eux.
